# EUROPEAN PATENT APPLICATION

(11) **EP 2 426 877 A1**
(43) Date of publication of application: **07.03.2012**
(21) Application number: 11191118.6
(22) Date of filing: 14.10.2004
(51) Int. Cl.: H04L 12/58, H04N 7/04, G11B 27/30, H04L 29/06, H04N 7/167, H04N 21/2343, H04N 21/854, H04N 21/2347

(54) **CONTAINER FORMAT FOR MULTIMEDIA PRESENTATIONS**

(30) Priority: 17.10.2003 SE 0302778
(62) Divisional of application: 04775554.1
(71) Applicant: Telefonaktiebolaget L M Ericsson (Publ), 164 83 Stockholm (SE)
(72) Inventor: Fröjdh, Per, 11343 Stockholm (SE); Westerlund, Magnus, 164 47 KISTA (SE); Einarsson, Torbjörn, 112 40 STOCKHOLM (SE)

(57) **Abstract**

In a method for transmitting a multimedia presentation comprising a number of media objects: the media objects are organized S10 in a multimedia container or container format; identifiers referring to the media objects are organized S20 in the same container; and an identifiable file coordinating the media objects is also provided S30 in the container.

## Description

### TECHNICAL FIELD

The present invention relates to media objects in general, specifically to multimedia presentations including coordinated media objects.

### BACKGROUND

Multimedia can be of many different types, e.g. video, audio, still images, vector graphics. Typically, each kind of media has a native file format, depending on the format of the media, for storage in computer systems.

For multimedia, there also exist a large number of compression formats that utilize spatial and/or temporal redundancies in order to obtain a compressed format of the media. A video file may, for instance, be compressed according to the H.263 compression standard [1], an audio clip as AMR [2] or AAC [3], and an image as JPEG [4].

There exist today a number of different methods for storing and/or transmitting files in general, and more specifically media files. One known such method is to include the files in a so-called file container. Examples of such containers include TAR (Tape Archive) for UNIX systems and Zip-files. Although these can contain media files they lack control functions for presentations, synchronization with timed media, and the possibility to interleave media. Another known method is to include files as e-mail attachments, so-called multi-part MIME. Here it is possible to point at start location for a presentation, but otherwise the above limitations apply. There is also another kind of multimedia formats that don't store media files per se, but frame media content of certain media types. These formats lack the transparency and integrity of a container format that can store and recover media files. Examples of such multimedia formats include ASF (Advanced Streaming Format) and Flash.

The Third-Generation Partnership Project (3GPP) has standardized the 3GPP file format (3GP) [5] for carriage of timed multimedia (audio and video), based on the ISO base media file format [6]. It is used by the so called Multimedia Messaging Service (MMS) and the transparent end-to-end packet switched streaming service (PSS) for distribution of multimedia [9]. Moreover, streaming servers for serving streamed media can use 3GP files.

### SUMMARY

An object of the present invention is to enable improved transmission of multimedia presentations.

In particular, it is desirable to enable improved transmission of multimedia presentations including different file formats.

It is a specific object of the present invention to provide a solution for container formats for full media presentations including e.g. start point, discrete media objects and continuous media tracks, storing MIME types and having the possibility of compression of individual media objects.

It is another specific object of the present invention to provide a container that can store media objects interleaved by splitting media objects into multiple fragments that are interleaved.

It is yet another specific object of the present invention to provide a solution enabling progressive download of mixed media objects including both continuous media tracks (e.g. audio and video) and/or discrete files (individual images).

It is yet another specific object of the present invention to provide a solution for encryption using the new container format and a Protection information box.

It is yet another specific object of the present invention to provide a solution including information for decryption of individual files, media tracks, the full data box ("mdat") or parts thereof.

These and other objects are achieved in accordance with the attached set of claims.

The present invention enables combining all kinds of media types in one kind of file, such as 3GP. The invention enables doing this in a transparent way preserving the addressing, filename, and MIME types of individual media objects after they have been contained in the 3GP file.

The invention also enables interleaving all media in a container file such that it can be progressively downloaded to a user, i.e. downloaded in a format so that it can be rendered, with some delay, during the download. This is extended by information about initial delays depending on transport bit rate, represented as pairs. For bit rates in between the specified values, an upper estimate for the initial download delay can be obtained by linear interpolation. Another feature is the possibility of compressing individual files using e.g. gzip.

Some of the advantages with the present invention are:
a container format that is simple and convenient (only one file to transport and play);
a container format that is optimized for short delay/progressive download (all media can be interleaved);
a container format that re-uses present technology (ISO based media file format and 3GP file format, SMIL, media types);
a container format which can be used with different media types .

### BRIEF DESCRIPTION OF THE DRAWINGS

The invention, together with further objects and advantages thereof, may best be understood by making reference to the following description taken together with the accompanying drawings, in which:
Fig. 1 is a schematic illustration of prior art relating to 3GPP;
Fig. 2 is a schematic general illustration of an embodiment of the present invention;
Fig. 3 is a schematic block diagram of a communication system in which the invention can be implemented;
Fig. 4 is a schematic flow diagram of an embodiment of a method according to the invention;
Fig. 5 is a schematic block diagram of an embodiment of an arrangement according to the invention;
Fig. 6 is a schematic illustration of an embodiment of a multimedia container according to the invention;
Fig. 7 is a schematic illustration of another embodiment of a multimedia container according to the invention;
Fig. 8 is another schematic illustration of a specific embodiment of a multimedia container according to the invention;
Fig. 9 is schematic illustration of an embodiment of part of the multimedia container in Fig. 8;

### DETAILED DESCRIPTION

The present invention will be described in the context of extending the prior art 3GPP file format (3GP) to a general container format for multimedia presentations. The invention may, however, be embodied in many different forms and should not be construed as limited to the examples and embodiments set forth herein. Rather, these examples and embodiments are provided so that this disclosure will be thorough, and will convey the invention to those skilled in the art.

It should be understood that the file format(s) may be represented in a storage medium such as a computer memory, or in a physical signal such as an electrical signal or a radio signal, e.g. for transfer within a local system or for transmission over a local or global network. In the following, the term file or media object will be used throughout the disclosure with a meaning including both data files for storage in a storage medium and signals for transfer or distribution.

According to prior art, the scope of the 3GP file format has been to carry timed multimedia (video, audio and timed text) and streaming hints of such media. 3GP files are used for
- interchange of video clips with associated audio (MMS)
- download of timed text (PSS)
- delivery of audio-visual presentations via progressive download (PSS)
- serving audio-visual RTP streaming sessions (PSS)
- delivery from content creators to streaming servers of streaming sessions (PSS)

The common denominator in prior art is that the content of a 3GP file is timed - a 3GP file contains one or more parallel tracks of timed multimedia or hints. Each track is divided into individually accessible time units that make synchronization and random access feasible. Of all the media types that can constitute a presentation in MSS or a session in PSS, 3GP files can only carry audio, video and timed text..

The problem of handling several files or media objects for e.g. a presentation or progressive download of such a presentation includes:
1) It must be clear where the starting point is (e.g. the name or location of the SMIL file).
2) Content creators need to deliver several files or objects with dependencies to operators. This can cause problems as it involves many files that also need to be stored in a certain way to preserve their dependencies. If one file is missing, the presentation may not be possible to use at all. Therefore, it would be advantageous to be able to gather all media objects of a multimedia presentation in one container
3) Users need to handle several files instead of one "item". It has been identified as problematic to move or send several files to a peer and still keep the relative structure between the files.
4) The timing for requesting several files may be problematic as they may be of different size and span different time ranges. An interleaved file format that allows for media prepared for timely delivery is lacking. Moreover, the client would need to know, given a transport bandwidth, how much to download in bytes or seconds, before playback is started (in order to avoid interruptions).

In addition to multimedia that is carried by 3GP files there are a number of media types in PSS that are stored in their native file formats: still images (JPEG), bitmap graphics (GIF and PNG), vector graphics (SVG), synthetic audio (SP-MIDI) and text (XHTML and SMIL). As only audio and video are streamed in a PSS session, these media types must be delivered file-by-file via HTTP to a PSS client in prior art.

If a progressively downloadable file is a part of the presentation, e.g. a progressively downloadable SVG file, such a file can be split and interleaved with other tracks or files of long duration.

An encryption mechanism is also needed that can reveal the content types "in the clear" for encoded content.

Basically, the present invention defines a container format for multimedia presentations, whereby an entire multimedia presentation including media objects such as static media files and/or dynamic media streams and an identifiable scene description file can be transmitted and stored as one unit.

According to a specific embodiment of the present invention, the container format is an interleaved unit, which is optimized for progressive download. Thereby, an entire multimedia presentation can be transmitted and downloaded by so-called progressive download or streaming.

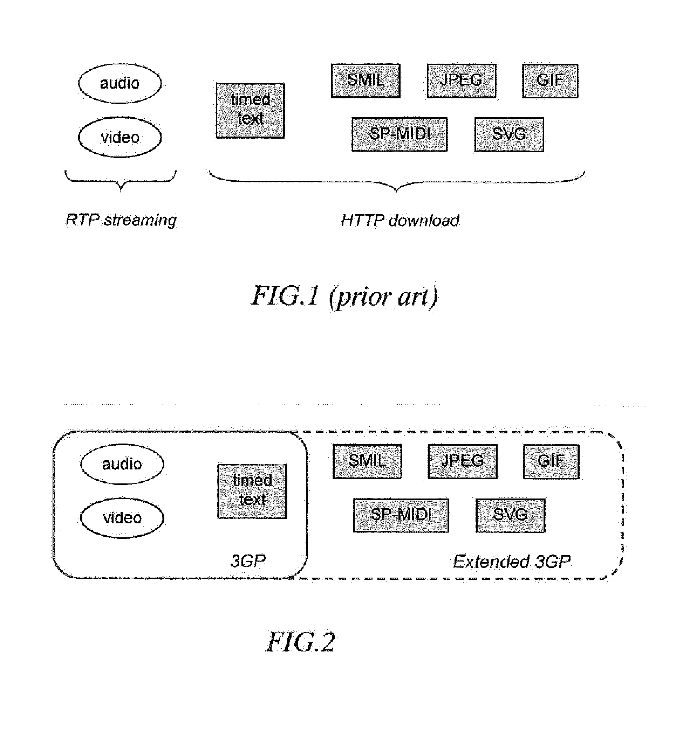

The present invention enables an extension of the prior art 3GPP file format (3GP) to a general container format for multimedia presentations, see Fig. 1 and Fig. 2. An extended 3GP file or container according to the present invention is not limited to contain only continuous or timed multimedia, but can also include a scene description file (e.g. SMIL) and static media (images, graphics). Any kind of multimedia used in MMS and PSS can in principal be stored as a binary file within an extended 3GP file.

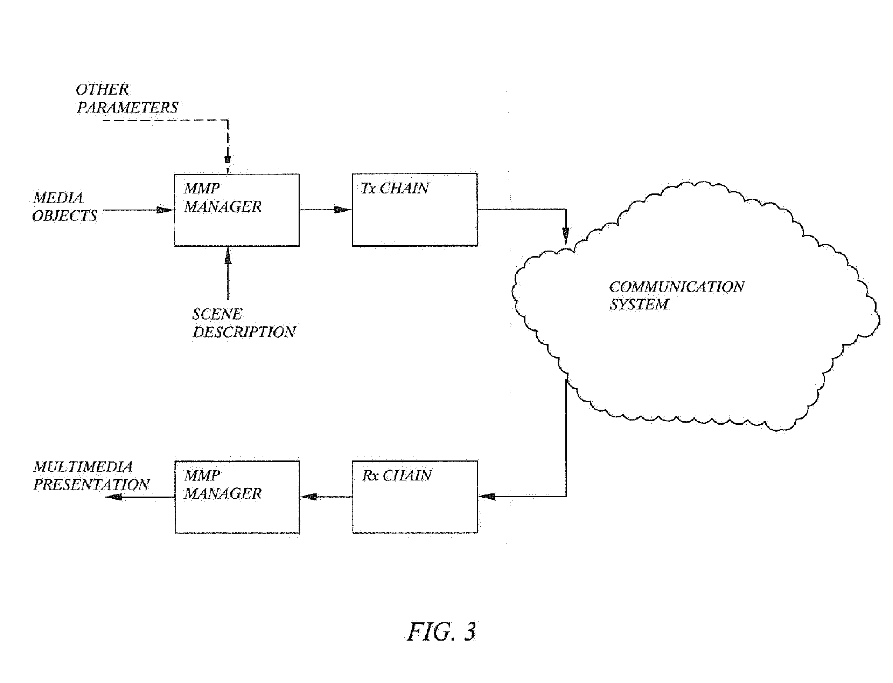

The invention will be described in the context of the general communication system illustrated in Fig. 3, but is not limited to this specific illustration. The unit MMP MANAGER referred to as the MultiMediaPresentation manager, provides the functionalities according to the invention, such as organizing media object constituting a multimedia presentation as one unit for e.g. transmission, storage or display of the entire multimedia presentation.

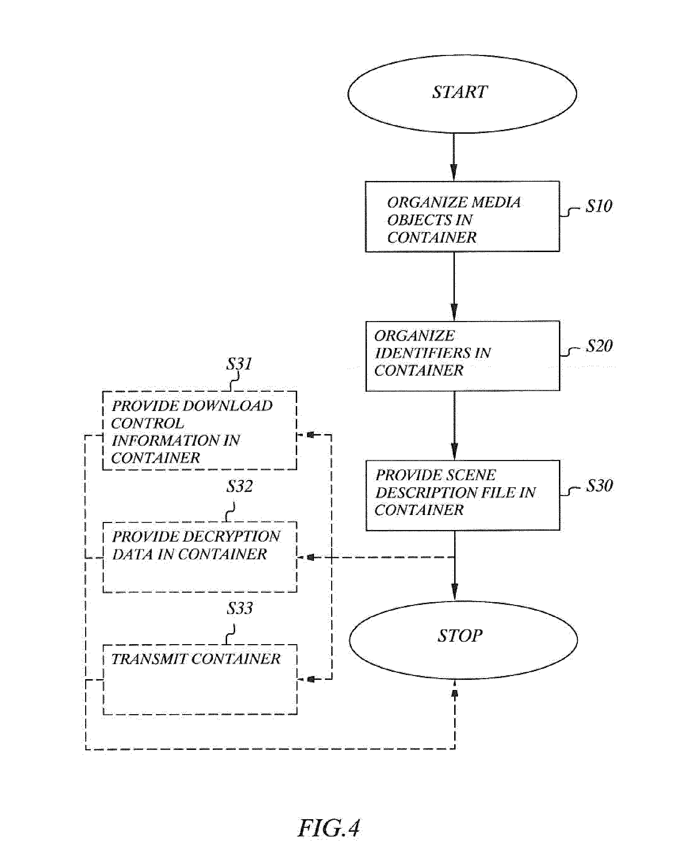

Basically, referring to Fig. 4, according to the invention, a method for transmitting a multimedia presentation comprising a number of media objects comprises packaging or organizing, in a first step S10, the media objects in a multimedia container or container format. In order to enable locating the media objects, a number of corresponding identifiers or locators are organized, in step S20, in the same container. Subsequently, in order to define the framework of the multimedia presentation, a so-called scene description file coordinating the media objects is provided, in step S30, in the same multimedia container. Finally, the entire container with the incorporated or included multimedia presentation is transmitted, in step S33, to some receiving unit.

The scene description should be clearly identifiable such that a receiving unit will be able to locate the scene description file as a starting position or starting file.

By the method according to the invention, it is possible to package an entire multimedia presentation into one container, which then can be transmitted and/or downloaded as one unit or file from a transmitting unit Tx.

According to a specific embodiment of the method according to the invention, it is possible to apply progressive download, i.e. a receiving unit Rx can initialize rendering of received parts of the presentation while remaining parts are still being transmitted, so called Progressive Download.

According to a specific embodiment of a method according to the invention, the media objects can comprise media files, e.g. JPEG, GIF, SVG, PNG, SP-MIDI, XHTML, SMIL, and 3GP.

According to another specific embodiment of a method according to the invention, the media files can comprise dynamic media objects contained in tracks, e.g. video, audio and timed text.

The scene description file can be formatted according to any suitable standard e.g. any one of SMIL, XHTML, and SVG.

Yet another embodiment includes organizing both static media files and/or dynamic media streams in the same container.

According to a further specific embodiment, the media objects are organized as interleaved continuous fragments of data in the multimedia container. Other terms for fragments comprise parts, extents, and chunks.

Throughout the description the terms static, binary and discrete media files will be used interchangeably without limiting the scope of the media files to be of a certain kind.

In order to enable a receiving unit Rx to utilize progressive download, an embodiment of a method according to the invention comprises the step S31 of providing control information enabling the rendering. The control information can include parameters such as initial or buffer delay based on a predetermined download rate.

In order to enable the inclusion of encrypted media files in the new container according to the invention, an embodiment of the invention comprises the step S32 of providing key information for decryption or recognition of the manner of encryption of the encrypted media files.

Similarly, also with reference to Fig. 4, the steps S10-S30 represent an embodiment of a method for managing multimedia presentations according to the invention. The method is closely related to the method for transmission, but without the step of transmission. The term managing is used in order to represent actions such as transmitting, storing, encrypting etc., but can also be regarded as a preparation of the media objects and associated information for such actions.

Since an entire multimedia presentation is contained in one file or container, it is very easy to store the presentation at some for storage facility. Similarly, it is easy to move the container e.g. from one part of a system to another or to distribute the container to a plurality of users.

The extension, according to an embodiment of the invention, of the 3GP file format typically comprises including a top-level file tree within the 3GP file. In this way a PSS presentation composed of several files, e.g. a SMIL file, an audio track and some images, can be packaged within a single 3GP file. The whole multimedia presentation can then be delivered, for example to a client via (progressive) download as one entity and played locally. Moreover, the extended 3GP format can be used to contain and deliver a complete PSS session as one entity to a PSS server. The server can then read the extended 3GP file and deliver the SMIL file and the images over HTTP and stream the audio track over RTP to the client.

The packaging or organizing of binary files, according to the invention, into a 3GP file is designed to preserve the directory structure of the binary files, such that the relationships between the files are the same for separate files and the extended 3GP file. However, once binary files have been included in a 3GP file there is no need to unpack them in order to play or serve the content. All contained files are referenced in the same fashion from within or from the outside of the 3GP file.

The binary files or static media files are normally not contained in usual tracks, which are designed for timed multimedia, but referred to by identifiers in a file tree at the top level of a 3GP file. However, the included files themselves can be interleaved with the usual tracks such that the entire 3GP file can be used for progressive download.

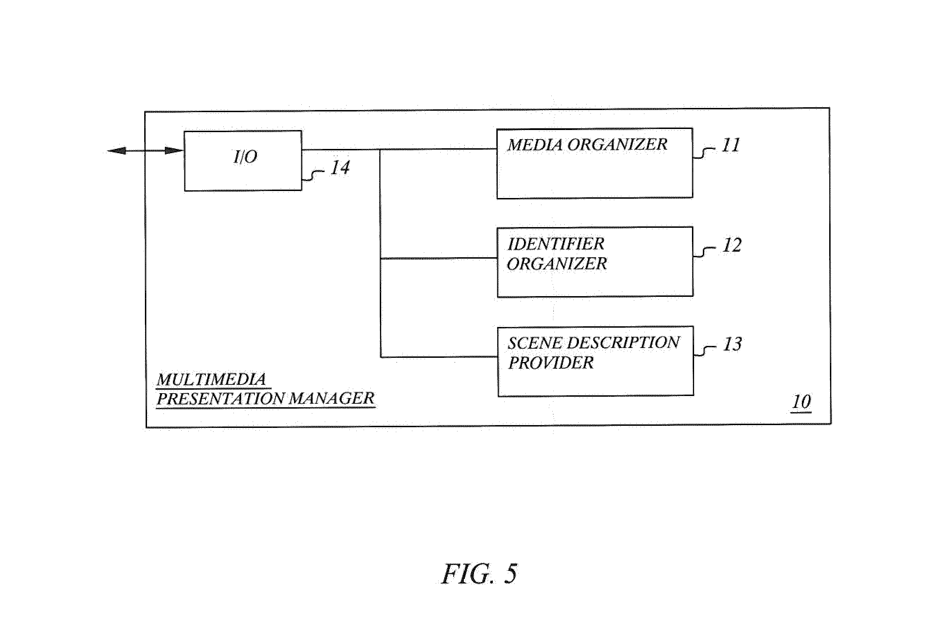

An arrangement 10 for transmitting multimedia presentations according to an embodiment of the invention will be described with reference to Fig. 5.

The arrangement 10 comprises a unit 11 for organizing a number of media objects of a multimedia presentation in a multimedia container. Further, the arrangement 10 typically includes some a unit 12 for organizing identifiers that refer to the organized media objects in the same multimedia container. Also, the arrangement comprises a unit 13 for providing the container with an identifiable scene description file that coordinates the media objects based on the identifiers. Finally, the arrangement 10 includes a unit 14 for transmitting the container with the incorporated multimedia presentation. In this particular embodiment, the transmitting unit 14 is represented by an I/O-unit.

The media objects can include both binary media files (e.g. MPEG, SVG, PNG, SP-MIDI, XHTML, SMIL, 3GP, JPEG, GIF) and/or dynamic media objects or streams (e.g. audio, video, timed text) contained in tracks.

In a specific embodiment of the invention, the media organizer 11 is configured or adapted to organize the media objects as interleaved continuous fragments of data. Other names for fragments comprise parts, extents and chunks.

According to another specific embodiment, the arrangement comprises some means for providing control information that enables a receiving unit Rx to use progressive download when receiving the container, i.e. the receiving unit Rx can render or display or execute parts of the content of the multimedia presentation while still downloading remaining parts. Some of the control information can include, but is not limited to, initial or buffer delay based on some predetermined download rate.

Extending the 3GP file format, according to the invention, allows self-contained multimedia presentations comprising of a scene description, audio, video and other media types to be stored in one file. An extended 3GP file can thus contain a complete presentation, which makes it much easier to transport and store than several files with dependencies. Moreover, since all media in such a file can be interleaved, it will be particularly useful for progressive download. An extended 3GP file containing a mixed multimedia presentation can be
- progressively downloaded (and simultaneously played) on a client (PSS),
- locally played after delivery (PSS and MMS), and
- serve as a general distribution format of multimedia presentations (MBMS).

Moreover, a complete PSS session with hint tracks for RTP streaming as well as media files for HTTP download can be contained in an extended 3GP file. It will be conceptually simpler to distribute one file per session and use one file as source for both streaming and download during a session. Extended server files are not intended for distribution to clients but to be
- delivered to operators from content creators,
- used by PSS servers for streaming (tracks) and HTTP-delivery (media files) .

Note that, according to the invention, also 3GP files can be included as binary files within extended 3GP files. For instance, a 3GP file containing a PSS session for serving audio and Timed text [6] includes an RTP hint track for audio and a separate 3GP file for Timed text. The reason is that Timed text is not streamed but delivered via HTTP in PSS Release 5.

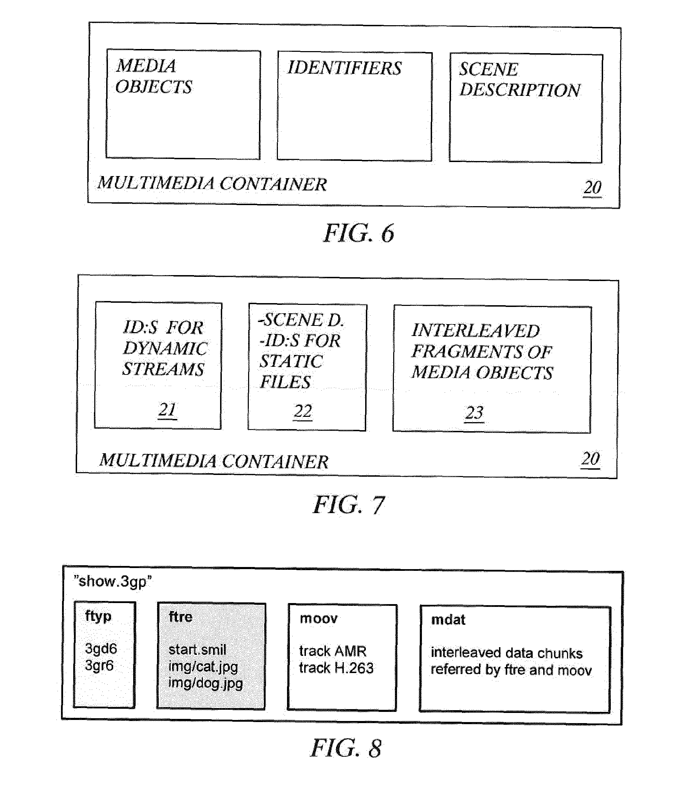

An embodiment of a multimedia container will be described with reference to Fig. 6.

The multimedia container 20 includes a number of media objects, identifiers or locators referring to the media objects, and a scene description file coordinating the media objects based on the identifiers.

According to a specific embodiment, both static media files and/or dynamic media objects contained in tracks can be included the multimedia container 20. The media objects can be included as one or more interleaved continuous fragments of data or included in their native format.

According to another specific embodiment, referring to Fig. 7, the identifiers referring to dynamic media objects are located in a first section 21 of the container and the identifiers referring to static media files are located in a second section 22 of the container. The interleaved media objects (both static and dynamic) are located in a third section of the container. The actual order of the sections is not limited to this embodiment. In addition, the scene description file is preferably treated as a static or binary media file and as such included in the second section 22 of the container 20. However, the individual order of the sections in the multimedia container is not reflected by this embodiment.

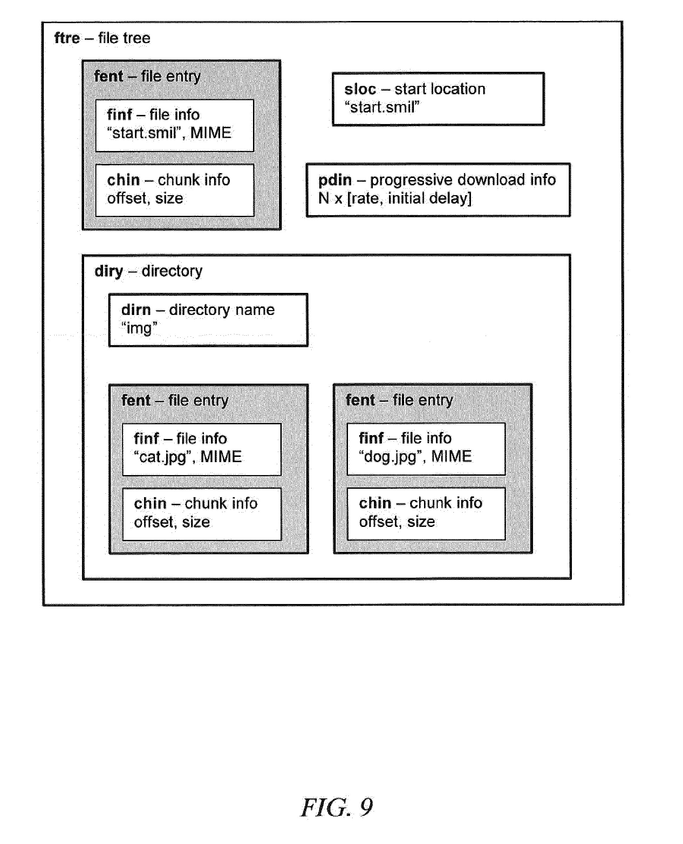

Another specific embodiment of a multimedia container will be described with reference to Fig. 8 and Fig. 9.

In this embodiment, the first section 21 is represented by the movie box moov, the second section 22 is represented by the file tree box ftre, and the third section 23 is represented by the media data box mdat. In addition, the container 20, according to the invention, comprises a file type box ftyp including information regarding the container format type.

The extensions to 3GP, according to the invention, include a new profile brand for file trees, a file directory structure and rules on addressing files within an extended 3GP file.

The File-directory profile (branded '3gd6') is defined for 3GP files that include a file directory. Files conforming to the File-directory profile shall include a File tree with one or more file entries. One of these may be a start file, i.e. contain a scene description for the presentation or streaming session.

According to an embodiment of the container both static media files and dynamic media objects contained in tracks are included in the container. The File-directory profile can be used in combination with other 3GP profiles, as long as the file conforms to those profiles. In particular,
- File-directory and Basic profiles together imply that the file has both a file directory and one or more tracks with audio, video or text,
- File-directory, Basic and Progressive-download profiles together imply that the entire 3GP file including tracks and contained files is suitable for progressive download. Further details on the progressive download delay are provided in the file.
- File-directory and Steaming-server profiles together imply that the server file
   - contains one or more hint tracks for serving media streams over RTP,
   - contains one or more binary files to be delivered over HTTP.

Among the binary files included in a server file, one may include a scene description (SMIL, HTML) for the PSS session. Additional files may be part of the session, i.e. images, SP-MIDI, Timed text, etc.

The invention will be described in more detail with reference to a specific and illustrative example.

According to another embodiment of a container, the container only includes static media files. In addition to adding a file directory to a 3GP file with tracks, the File-directory profile can be used for files that only contain a file directory and no tracks (no movie box), in other words, static or binary media files. Such 3GP files would be very useful for making self-contained presentations that don't necessarily include continuous media carried by tracks. Examples include slide shows for local play out or PSS sessions based on images, synthetic audio or text.

The File-directory profile is a 3GP profile and should be used with the file extension `.3gp'.

### File tree

A file directory for storage of binary files is normally included at the top level of an extended 3GP file. The tree looks like a normal directory and can include any type of binary file and/or sub directories. The file directory is stored as meta-data in the File-tree box, whereas the binary content of the included files is stored as chunks in the Media-data box 'mdat' of the containing file.

An example of a file tree is shown in Fig. 9, corresponding to the file entries in Fig. 8. The following sections explain the function of each box in Fig. 9.

The File-tree box `ftre' is a container box. It is a top-level box and shall be located after the File-type box `ftyp' in a 3GP file and preferably before the Movie box 'moov'. (See Fig. 8) In order to allow for future revisions, the File-tree box is based on a so-called Full box with version number, as shown in Table 1.

**Table 1:FileTreeBox**

| Field | Type | Details | Value |
|---|---|---|---|
| **BoxHeader**.Size | Unsigned | | |
| | int(32) | | |
| **BoxHeader**.Type | Unsigned | | 'ftre' |
| | int(32) | | |
| **BoxHeader**.Version | Unsigned | | 0 |
| | int(8) | | |
| **BoxHeader**.Flags | Bit(24) | | 0 |
| | | Contained boxes | |

The File-tree box defines the root level of the 3GP file tree. A hierarchy of Directory boxes 'diry' defines lower levels of the file tree. Directory boxes according to Table 2 below are contained in the File-tree box or other Directory boxes.

**Table 2DirectoryBox**

| Field | Type | Details | Value |
|---|---|---|---|
| **BoxHeader**.Size | Unsigned | | |
| | int(32) | | |
| **BoxHeader**.Type | Unsigned | | 'diry' |
| | int(32) | | |
| **BoxHeader**.Version | Unsigned | | 0 |
| | int(8) | | |
| **BoxHeader**.Flags | Bit(24) | | 0 |
| | | Contained boxes | |

Each directory box is required to contain one Directory-name box 'dirn' according to Table 3:

**Table 3: DirectoryNameBox**

| Field | Type | Details | Value |
|---|---|---|---|
| **BoxHeader**.Size | Unsigned | | |
| | int(32) | | |
| **BoxHeader**.Type | Unsigned | | 'dirn' |
| | int(32) | | |
| **BoxHeader**.Version | Unsigned | | 0 |
| | int(8) | | |
| **BoxHeader**.Flags | Bit(24) | | 0 |
| DirectoryName | String | Directory name | |

Directory name is a null-terminated string in UTF-8 characters with the name of the directory.

### File entry

A file in the file tree is defined by a File-entry box `fent', that can be stored at any level in the file tree, including the root level. The File entry box is a container box and is defined below in Table 4.

**Table 4: FileEntryBox**

| Field | Type | Details | Value |
|---|---|---|---|
| **BoxHeader**.Size | Unsigned | | |
| | int(32) | | |
| **BoxHeader**.Type | Unsigned | | 'fent' |
| | int(32) | | |
| **BoxHeader**.Version | Unsigned | | 0 |
| | int(8) | | |
| **BoxHeader**.Flags | Bit(24) | | 0 |
| **FileInfoBox** | | File name and MIME type | |
| **ChunkInfoBox** | | Location of file as a chunk | |
| | | Optional boxes | |

Each File entry box shall include a File-info box `finf' and a Chunk-info box 'chin', as defined below in Table 5 and Table 6.

**Table 5:FileInfoBox**

| Field | Type | Details | Value |
|---|---|---|---|
| **BoxHeader**.Size | Unsigned | | |
| | int(32) | | |
| **BoxHeader**.Type | Unsigned | | 'finf' |
| | int(32) | | |
| **BoxHeader**.Version | Unsigned | | 0 |
| | int(8) | | |
| **BoxHeader**.Flags | Bit(24) | | 0 |
| FileName | String | File name including extension | |
| ContentType | String | MIME type | |
| ContentEncoding | String | Optional, indicates if the stored file is encoded | |

File name and Content type are null-terminated strings in UTF-8 characters. Content type should be the MIME type for the file. Content encoding is an optional null-terminated string used to indicate that the file stored within the 3GP file is encoded, and needs to be decoded before interpreted, similar to Content-Encoding for HTTP /1.1. Some possible values are "gzip", "compress", "deflate", but for interoperability reasons, the only entry to be used is "gzip".

**Table 6: ChunkInfoBox**

| Field | Type | Details | Value |
|---|---|---|---|
| **BoxHeader**.Size | Unsigned | | |
| | int(32) | | |
| **BoxHeader**.Type | Unsigned | | 'chin' |
| | int(32) | | |
| **BoxHeader**.Version | Unsigned | | 0 |
| | int(8) | | |
| **BoxHeader**.Flags | Bit(24) | | 0 |
| [ChunkOffset,Chu | Unsigned | Position and length | |
| nkSize]xN | int(64)[2xN] | of file chunk | |

The actual content of an included file is stored as one or more continuous fragments (i.e. chunks, extents) of data in the media-data box 'mdat'. ChunkOffset is a 64 bit integer that gives the offset of the start of the chunk into the containing 3GP file and ChunkSize is a 64 bit integer that gives the size of the chunk, i.e. the length of the file defined by the File-entry box. Note that the chunk offset always refers to the containing file, i.e. the 3GP file. We have refrained from using a Data-reference box to indicate possible external locations of the data, as the point of including binary files in a 3GP file is to have a self-contained file.

In principle any type of file can be contained in the file tree. For PSS, the following media files are likely to be used: still images (JPEG), bitmap graphics (GIF and PNG), vector graphics (SVG), and synthetic audio (SP-MIDI), text (XHTML and SMIL), and 3GP files carrying Timed text. Any new kind of media file adopted for PSS, would also be possible to store in the file tree. This would for instance include DLS (down-loadable sound).

### Start location

An extended 3GP file may contain a scene description located anywhere in the file tree. If it is present, the File-tree box shall contain a StartLocationBox according to Table 7.

**Table 7: StartLocationBox**

| Field | Type | Details | Value |
|---|---|---|---|
| **BoxHeader**.Size | Unsigned | | |
| | int(32) | | |
| **BoxHeader**.Type | Unsigned | | 'sloc' |
| | int(32) | | |
| **BoxHeader**.Version | Unsigned | | 0 |
| | int(8) | | |
| **BoxHeader**.Flags | Bit(24) | | 0 |
| StartFileLocation | String | File path relative root level | |

StartFileLocation is a null-terminated string in UTF-8 characters containing the path to the start file in the file directory, relative to the top level. As an example, to indicate that a file stored at the top level (in the file tree box) is a scene description, StartFileLocation would just contain the file name, e.g. start.smil.

### Information on progressive download

An extended 3GP file may contain one Progressive-download information box `pdin' located in the File-tree box, as defined below in Table 8:

**Table 8: ProgressiveDownloadInfoBox**

| Field | Type | Details | Value |
|---|---|---|---|
| **BoxHeader**.Size | Unsigned | | |
| | int(32) | | |
| **BoxHeader**.Type | Unsigned | | 'pdin' |
| | int(32) | | |
| **BoxHeader**.Version | Unsigned | | 0 |
| | int(8) | | |
| **BoxHeader**.Flags | Bit(24) | | 0 |
| [Rate,InitialDelay] | Unsigned | Pairs of bit rate and | |
| xN | int(32)[2xN] | initial delay | |

This box contains N pairs of numbers (to the end of the box) specifying combinations of transport bandwidth in units of 100 bits/sec and initial download delay in units of ms. By using this information, the receiving party can obtain an upper estimate for the initial delay by linear interpolation between pairs.

### Addressing

Files and tracks within a 3GP file can be addressed consistently within the 3GP file as well as from the outside. The file directory and all tracks of a 3GP file reside at the top level, e.g. example.3gp/toplevelfile.smil and example.3gp/ trackID=2.

As an example of addressing within a 3GP file, consider the multimedia container show.3gp outlined in Fig. 8. It contains
- an H.263 track (with let's say track ID = 1),
- an AMR track (with let's say track ID = 2),
- a root-level SMIL file (start.smil), and
- two images (cat.jpg and dog.jpg) in a directory (img).

The scene description in the SMIL file, located at the top level of the 3GP file, would refer to the media files in Fig. 8 as follows:
H.263 as trackID=1
AMR as trackID=2
cat.jpg as img/cat.jpg
dog.jpg as img/dog.jpg

From outside the content of the 3GP file, according to the invention, is addressed as follows:
SMIL as show.3gp/start.smil
H.263 as show.3gp/trackID=1
AMR as show.3gp/trackID=2
cat.jpg as show.3gp/img/cat.jpg
dog.jpg as show.3gp/img/dog.jpg

Now consider moving the SMIL file in the previous example to the directory img containing the images. Relative to the SMIL file, the media is now referred as follows:
H.263 as ../trackID=1
AMR as ../trackID=2
cat.jpg as cat.jpg
dog.jpg as dog.jpg

From outside the content of the 3GP file would now be addressed as follows:
SMIL as show.3gp/img/start,smil
H.263 as show.3gp/trackID=1
AMR as show.3gp/trackID=2
cat.jpg as show.3gp/img/cat.jpg
dog.jpg as show.3gp/img/dog.jpg

Files contained in the file tree may be delivered over HTTP before or during a PSS session. An HTTP server delivering a binary file stored inside a 3GP file shall
- set the Content-Type to the value of the file entry box,
- set the Content-Location to the URI of the binary file within the 3GP file.

As an example, the 3GP file in Fig. 8 with hint tracks included may contain a PSS session. When the client accesses the SMIL file over HTTP, it also receives the Content-Location of the SMIL file, e.g. "http://mediaportal/show.3gp/". All HTTP references within the SMIL file will then be based upon the Content-Location, enabling HTTP GET to refer to binary files within the 3GP file.

A client shall in the same manner resolve the URIs for RTSP based on the Content-Location of the SMIL file, enabling RTSP DESCRIBE to refer to the 3GP file and, RTSP SETUP to refer to tracks.

Example: Retrieval of SMIL file and resolving URI to resources pointed out within the SMIL file.

GET/exampledir/show.3gp/img/start.smilHTTP/1.1 Host: www.example.com HTTP/1.1 200 OK
Content-Location:
http://www.example.com/exampledir/show.3gp/img/start. smil
Content-Size: xxxxxx Content-Type: application/ smil

```
 <smil>
      <body>
            <seq>
                  <image src="cat.jpg" dur="3s"/>
                  <image src="dog.jpg" dur="5s"/>
            </seq>
      </body>
 </smil>
```

The above fetched SMIL presentation will thus be given the base URI:
"http://www.example.com/exampledir/show.3gp/img/start.smil", which when the processing of the SMIL file is performed will result in that the resolved HTTP URIs:
   "http://www.example.com/exampledir/show.3gp/img/cat.jpg"
   "http://www.example.com/exampledir/show.3gp/img/dog.jpg"

### File formats and Encryption

According to prior art, it is possible to extend the 3GP file format with a mechanism for storage of encrypted media. In addition 3GPP-specific extensions that apply to encryption of text tracks and a 3GP profile brand for encrypted 3GP files are defined. Details on the encryption scheme are stored in a protection information box. For the usage of encrypted 3GP files with OMA DRM ver 2, the exact details of the scheme will be defined by OMA.

The general idea behind the extensions is to replace code points (codec identifiers) of encrypted media with generic code points for encrypted media. This prevents legacy players and other encryption-unaware players from accessing bit streams that need to be decrypted before they can be decoded. For encryption-aware players, however, the new code points contain information on key management and requirements for decrypting encrypted media. In addition they replicate the original codec identifier and other decoding parameters needed to decode the bit streams once they have been decrypted.

Encrypted 3GP files can also be used for streaming servers to serve encrypted media over RTP. Hint tracks of such 3GP files are not encrypted per se, i.e. a PSS server does not have to decrypt anything in order to serve the encrypted content. Information on key management and decryption is conveyed to the client in the SDP description, with the relevant parts stored in the hint track of the 3GP file. However, as the content provider may want to force the server to take certain actions, such as providing integrity protection before data is streamed; there is still a need to redefine the code point for hint tracks as well. The new code points replicate the original code point information while providing information on required integrity protection. This way encryption-unaware servers will be prevented to serve encrypted data that were supposed to be integrity prevented.

### Profile for encrypted 3GP files

One way to signal encrypted media in a 3GP file is to define and use an Encryption profile (branded `3ge6'). Further details on the kind of file that is encrypted is given by other brands, such as a Basic profile brand for download of audio/video presentations or Streaming-server profile for serving of encrypted content.

Files conforming to Encryption profile shall use the encrypted-sample description entries (code points) for media tracks containing encrypted media. A file conforming to Encryption profile may contain both encrypted and unencrypted tracks, but not if they are of the same media type.

The Encryption profile should be used as a major brand. It can also be used in combination with other 3GP profiles, as long as the file conforms to those profiles.

In particular,
- Encryption and Basic profiles together imply that the maximum number of tracks shall be one for video, one for audio and one for text. A file may contain both encrypted and unencrypted tracks. Note however, that an encryption-unaware player will ignore encrypted tracks.
- Encryption and Progressive download profiles together imply that the file is both encrypted and suitable for progressive download.
- Encryption and Streaming-server profile imply that the content referred to by one or more hint tracks is encrypted. If a PSS server is required to take special actions, such as provide integrity protection, encrypted sample description entries (code points) for hint tracks shall be used.

Note that the General profile is defined as a superset of all profiles including Encryption profile. A 3GP file conforming to General profile (only) may contain any number of encrypted tracks not yet combined into 3GP files suitable for download or streaming or without necessary information on key management.

The Encrypted-basic profile is a 3GP profile and should be used with the file extension `.3gp'.

### Code points for encrypted media

The sample description entries of a media track in a 3GP file identify the format of the encoded media, i.e. codec and other coding parameters. Hence, by simply parsing the sample descriptions, a player can decide which tracks it is able to play.

All sample entries for audio and video derived from the ISO base media file format contain a set of mandatory fields. In addition, they may contain boxes specific to the codec in question. MPEG-4 codecs (Visual and AAC) use the ESDBox, whereas AMR and H.263 use the AMRSpecificBox and the H263SpecificBox, respectively.

The principle behind storing encrypted media in a track is to "disguise" the original sample description entry with a generic code point for encrypted media. We define three code points (four-character codes of the sample description entries) for signalling encrypted video, audio and text as follows in Table 9:

**Table 9: Code points**

| **format identifier** | **original format** | **media content** |
|---|---|---|
| encv | s263, mp4v | encrypted video: H.263 or MPEG-4 visual |
| enca | samr, sawb, mp4a | encrypted audio: AMR, AMR-WB or AAC |
| enct | 3gtt | encrypted text: timed text |

The "encrypted" versions of the sample descriptions replicate the original sample descriptions and include a protection information box with details on the original format as well as all requirements for decrypting the encoded media. The EncryptedVideoSampleEntry and the EncryptedAudioSampleEntry are defined in Table 10 and Table 11, where TheProtectionInfo box is simply added to the list of boxes contained in a sample entry.

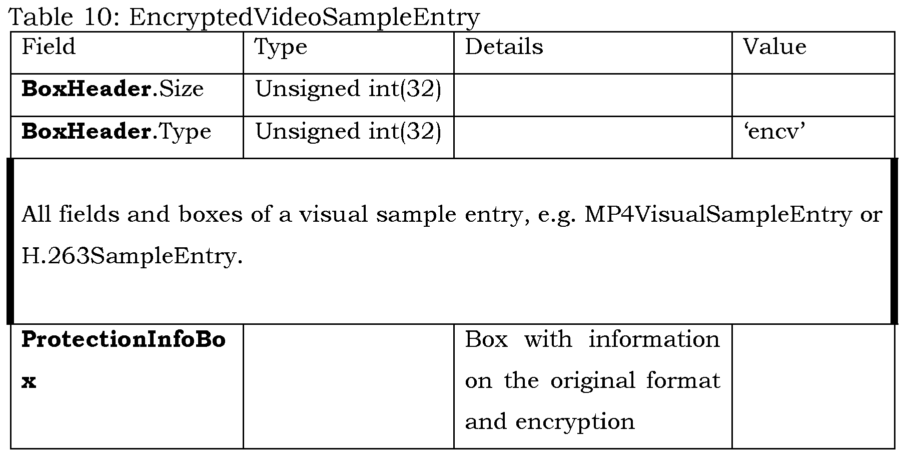

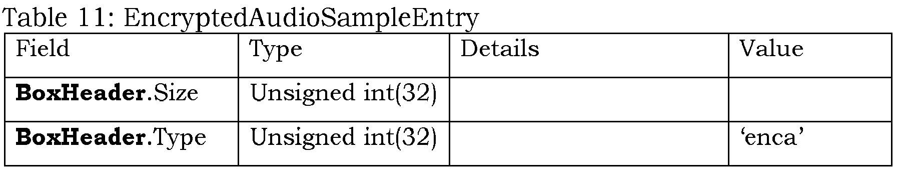

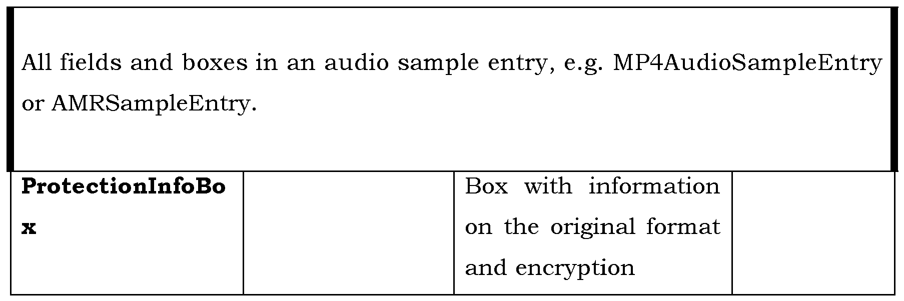

The EncryptedVideoSampleEntry and the EncryptedAudioSampleEntry can also be used with any additional codecs added to the 3GP file format, as long as their sample entries are based on the SampleEntry of the ISO base media file format.

The EncryptedTextSampleEntry is defined in Table 12. Text tracks are specific to 3GP files and defined by the Timed text format in 26.245. In analogy with the cases for audio and video, we add a ProtectionInfoBox at the end.

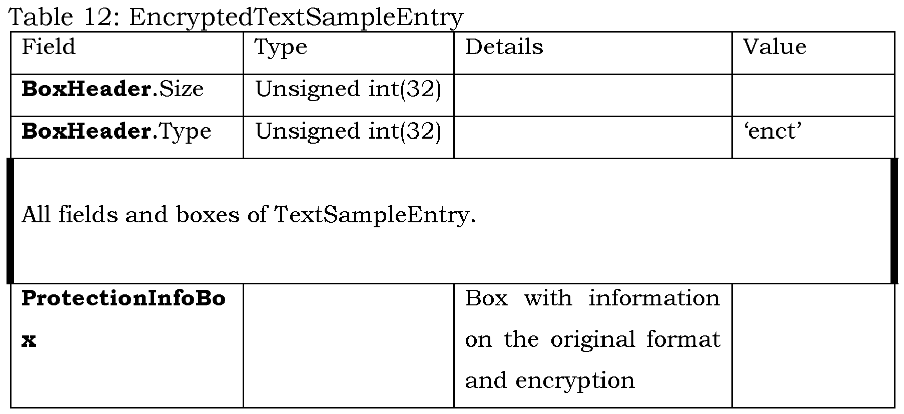

### Key management

The necessary requirements for decrypting media are stored in the Protection information box. It contains the Original format box, which identifies the codec of the decrypted media, the Scheme type box, which identifies the protection scheme used to protect the media, and the Scheme information box, which contains scheme-specific data (defined for each scheme). The Protection information box and its contained boxes are defined in Table 13 - Table 16.

**Table 13: ProtectionInfoBox**

| Field | Type | Details | Value |
|---|---|---|---|
| **BoxHeader**.Size | Unsigned | | |
| | int(32) | | |
| **BoxHeader**.Type | Unsigned | | 'sinf' |
| | int(32) | | |
| **BoxHeader**. Version | Unsigned | | 0 |
| | int(8) | | |
| **BoxHeader**.Flags | Bit(24) | | 0 |
| **OriginalFormatBox** | | Box containing identifying the original format | |
| **SchemeTypeBox** | | Box containing the protection scheme. | |
| **SchemeInformatio nBox** | | Box containing the scheme information. | |

**Table 14: OriginalFormatBox**

| Field | Type | Details | Value |
|---|---|---|---|
| **BoxHeader**.Size | Unsigned | | |
| | int(32) | | |
| **BoxHeader**.Type | Unsigned | | 'frma' |
| | int(32) | | |
| DataFormat | Unsigned | orginal format | |
| | int(32) | | |

DataFormat identifies the format (codec) of the decrypted, encoded data. The currently defined formats in 3GP files include 'mp4v', 'h263', 'mp4a', 'samr', sawb' and `3gtt'.

**Table 15: SchemeTypeBox**

| Field | Type | Details | Value |
|---|---|---|---|
| **BoxHeader**.Size | Unsigned | | |
| | int(32) | | |
| **BoxHeader**.Type | Unsigned | | 'schm' |
| | int(32) | | |
| **BoxHeader**. Version | Unsigned | | 0 |
| | int(8) | | |
| **BoxHeader**.Flags | Bit(24) | | 0 or 1 |
| SchemeType | Unsigned | 4cc identifying the scheme | |
| | int(32) | | |
| SchemeVersion | Unsigned | Version number | |
| | int(16) | | |
| SchemeURI | Unsigned | Browser URI (null-terminated UTF-8 string). Present if (Flags & 1) true | |
| | int(8)[] | | |

SchemeType and SchemeVersion identify the encryption scheme and its version. An example that can be used for OMA DRM is given in the following section. As an option, it is possible to include an URI pointing to a web page for users that don't have the encryption scheme installed.

**Table 16: SchemeInformationBox**

| Field | Type | Details | Value |
|---|---|---|---|
| **BoxHeader**.Size | Unsigned | | |
| | int(32) | | |
| **BoxHeader**.Type | Unsigned | | 'schi' |
| | int(32) | | |
| **BoxHeader**. Version | Unsigned | | 0 |
| | int(8) | | |
| **BoxHeader**.Flags | Bit(24) | | 0 |
| | | Box(es) specific to scheme identified by | |
| | | SchemeType | |

The boxes contained the SchemeInformationBox are defined by the scheme type.

### Example of encryption scheme

The encryption scheme to be used by OMA is currently developed by OMA DLDRM. As the scheme will be defined by OMA, OMA should also define the file format boxes expressing the scheme in 3GP files. Below is an example of how such a definition may look like:
Scheme type: 'odrm'
Scheme version: 0

Scheme-specific boxes: OMADRMSampleFormatBox and OMADRMHeadersBox, see Table 17 and Table 18.

**Table 17: OMADRMSampleFormatBox**

| Field | Type | Details | Value |
|---|---|---|---|
| **BoxHeader**.Size | Unsigned | | |
| | int(32) | | |
| **BoxHeader**.Type | Unsigned | | 'osfm' |
| | int(32) | | |
| **BoxHeader**.Version | Unsigned | | 0 |
| | int(8) | | |
| **BoxHeader**.Flags | Bit(24) | | 0 |
| SelectiveEncryption | Bit(1) | | 0 or 1 |
| Reserved | Bit(7) | | 0 |
| KeyIndicatorLength | Unsigned | Length of key | |
| | int(8) | indicator | |
| IVLength | Unsigned | Length of IV | |
| | int(8) | | |

**Table 18: OMADRMHeadersBox**

| Field | Type | Details | Value |
|---|---|---|---|
| **BoxHeader**.Size | Unsigned | | |
| | int(32) | | |
| **BoxHeader**.Type | Unsigned | | 'ohdr' |
| | int(32) | | |
| **BoxHeader**. Version | Unsigned | | 0 |
| | int(8) | | |
| **BoxHeader**.Flags | Bit(24) | | 0 |
| CTLen | Unsigned | Length of fixed headers (for performance reasons) | |
| | int(8) | | |
| CIDLen | Unsigned | Length of Content ID | |
| | int(8) | | |
| ContentType | Unsigned | Content Type header | |
| | int(8)[CTLen] | | |
| ContentID | Unsigned | Content ID header | |
| | int(8)[CIDLen] | | |
| Headers | Unsigned | Rest of headers, including issuer URL, to end of box | |
| | int(8) [ ] | | |

### Encrypted server files

PSS servers can also use 3GP files for streaming of encrypted media. The principle here is to packetize-then-encrypt. Conceptually, there is no difference between serving encrypted media and unencrypted media from a 3GP server file. In both cases, the PSS server can simply follow the hint instructions of the file. All the necessary information for using the streamed media is conveyed to the client via the SDP description. For encrypted media this also includes the requirements for decrypting the media streams.

### Encryption

According to a specific embodiment of the present invention, it is possible to include encrypted media files in an extended 3GP file. Consequently, a solution for encryption and decryption using the container file format and the Protection information box will be described below.

By default, binary files are stored "in the clear". However, it is also possible to include encrypted binary files in the file directory of a 3GP file. The presence of a Protection information box in a file entry box indicates that the content of the binary file (media data) is encrypted. Moreover, the Protection information box identifies the encryption scheme and all information required to decrypt the corresponding media data.

The Protection information box here is the same as the protection information box proposed for encrypted tracks in Table 13-Table 18. The definition is the same, although the Original-format box shall be ignored (should not be included) for binary files. Note that the purpose of the protection information box for binary files is two-fold: it indicates that media is encrypted and it gives the requirements for decrypting it.

The Protection information box 'sint' contains the Scheme type box 'schm', which identifies the protection scheme used to protect the media, and the Scheme information box 'schi', which contains scheme-specific data (defined for each scheme.

The boxes contained by the SchemeInformationBox are defined by the scheme type. Similarly, it is possible to define boxes that apply to the full 'mdat' or a byte range inside 'mdat'. This could be good for a presentation with many small files

According to the invention, the 3GP file format is extended to a general container format by inclusion of a file tree for binary files, comprising information such as their MIME types. Any kind of multimedia used in MMS and PSS can thus be stored in a 3GP file together with a scene description. The container format is constructed in such a way as to allow for progressive download of a whole multimedia presentation or session. Thereby, extended 3GP files can be delivered by download or progressive download, and played by 3GP players. Such extended 3GP files with hint tracks can contain entire PSS sessions and be served by PSS servers, where continues media is streamed via RTP and media files are delivered via HTTP.

3GP files that are extended according to the invention and contain a file tree may define a 3GP profile (brand). Files in the file tree can be stored "in the clear" or encrypted together with requirements on how to decrypt them.

For fragmented files, the full presentation is made into more than one fragment. The presentation will then be (progressively) downloadable fragment by fragment, where later fragments will enhance the previous ones with more files or media tracks or continuation of files or media tracks. It is also possible to have live download by sending the presentation fragment by fragment. For the overall presentation organization, having SMIL-files in several fragments, and a scheme for how to update, enhance or replace a SMIL file can do this.

Moreover, the invention relates to how the presentation can be combined with a scene description and how it can be used as a container format for mixed sessions where some media is streamed and other is downloaded.

It will be understood by those skilled in the art that various modifications and changes may be made to the present invention without departure from the scope thereof, which is defined by the appended claims.

### REFERENCES

[1] ITU-T Recommendation H.263 (2001), *Video codec for low bit rate communication.*
[2] 3GPP TS 26.071: *Mandatory Speech CODEC speech processing functions; AMR Speech CODEC; General description.*
[3] ISO/IEC 14496-2:2001, *Information technology - Coding of audio-visual objects - Part 3*: *Audio* (MPEG-4 part 3).
[4] ITU-T Recommendation T.81 (1992).
[5] 3GPP TS 26.244: *Transparent end-to-end packet switched streaming service (PSS); 3GPP file format (3GP)..*
[6] ISO/IEC 14496-12:2003 | 15444-12:2003: *Information technology - Coding of audio-visual objects - Part 12: ISO base media file format* | *Information technology - JPEG 2000 image coding system - Part 12: ISO base media file format.*
[7] US Patent 2003/0053416 A1, *Generalized Reference Decoder for Image or Video Processing,* Ribas-Corbera et al., Microsoft.
[9] 3GPP TS 26.234: *Transparent end-to-end packet switched streaming service (PSS); Protocols and codecs.*

## Claims

1. A method for transmitting a multimedia presentation comprising a plurality of media objects, said method comprising:
organizing (S10) the plurality of media objects in a multimedia container;
organizing (S20), in said multimedia container, identifiers referring to each of said plurality of media objects;
providing (S30), in said multimedia container, an identifiable starting file coordinating the plurality of media objects based on the said identifiers, to enable identification of the start of said multimedia presentation and the dependencies between said plurality of media objects of said multimedia presentation;
providing (S31) download control information comprising buffer delay based on a predetermined download speed to enable a receiver to render the identifiable starting file and media objects of said multimedia container during the transmission;
transmitting (S33) said multimedia container and the incorporated multimedia presentation

2. The method according to claim 1, wherein said media objects comprise at least one static media file.

3. The method according to claim 2, wherein said step of organizing (S10) the media objects comprises organizing the media files as interleaved continuous fragments of data in the multimedia container.

4. The method according to claim 1, wherein said media objects comprise both dynamic media objects in tracks and static media files.

5. The method according to claim 4, wherein said step of organizing (S10) media objects comprises organizing both the static media files and the dynamic media objects as interleaved continuous fragments of data in the multimedia container.

6. The method according to claim 5, wherein the container is progressively transmitted to at least one receiver.

7. The method according to any of claims 1-6, wherein a receiver renders the identifiable starting file and media objects of said container during the transmission.

8. The method according to claim 7, wherein said method further comprises the step of providing (S31) download control information enabling the receiver to render the identifiable starting file and media objects of said multimedia container during the transmission.

9. The method according to claim 1, wherein at least one of said media objects is encrypted and said method further comprises providing (S32) decryption data for enabling decryption of said at least one encrypted media object.

10. An arrangement (10) for transmitting a multimedia presentation comprising a plurality of media objects, said arrangement comprising:
means for organizing (11) the plurality of media objects in a multimedia container;
means for organizing (12), in said multimedia container, identifiers referring to each of said plurality of media objects;
means for providing (13), in said multimedia container, an identifiable starting file coordinating the plurality of media objects based on the said identifiers, to enable identification of the start of said multimedia presentation and the dependencies between said plurality of media objects of said multimedia presentation; and
means for providing download control information enabling the receiver to render the identifiable starting file and media objects of said container during the transmission, wherein said means for providing download control information are configured to supply information regarding buffer delay based on a predetermined download speed; and
means for transmitting (14) said multimedia container and the incorporated multimedia presentation, thereby enabling display of the multimedia presentation directly from the transmitted container.

11. The arrangement according to claim 10, wherein said media objects comprise at least one static media file.

12. The arrangement according to claim 11, wherein said means for organizing (11) the plurality of media objects are configured for organizing the static media files as interleaved continuous fragments of data in the multimedia container.

13. The arrangement according to claim 12, wherein said media objects comprise both dynamic media objects in tracks and static media files.

14. The arrangement according to claim 13, wherein said means for organizing (11) the media objects are adapted to organize both the static media files and the dynamic media objects as interleaved continuous fragments of data.

15. The arrangement according to claim 10, wherein said multimedia container is configured to enable a receiver to render the identifiable starting file and media objects of said multimedia container during the transmission.

16. The arrangement according to claim 10, wherein at least one of said media files is encrypted and said arrangement further comprising means for providing decryption data for enabling decryption of said at least one encrypted media object.

17. A multimedia container (20) for multimedia presentations comprising a plurality of media objects, said multimedia container comprising:
said plurality of media objects;
identifiers referring to said plurality of media objects;
an identifiable starting file coordinating the plurality of media objects based on said identifiers, to enable identification of the start of said multimedia presentation and the dependencies between said plurality of media objects of said multimedia presentation;
download control information enabling a receiver to render the identifiable starting file and media objects of said container during transmission of the multimedia container.

18. The multimedia container according to claim 17, wherein said media objects comprise at least one of: static media files, and dynamic media objects in tracks.

19. The multimedia container according to claim 18, wherein said media objects comprise both static media files and dynamic media objects.

20. The multimedia container according to any of claims 17-19, wherein said media objects are organized as interleaved continuous fragments of data in a section (23) of the multimedia container (20).

21. The multimedia container according to claim 18, wherein
identifiers referring to the static media files are located in a second section (21) of the multimedia container;
identifiers referring to the dynamic media objects are located in a third section (22) of the multimedia container (20).

22. The multimedia container according to claim 21, wherein said identifiable starting file is located in said second section (21) of the multimedia container.

23. The multimedia container according to claim 17, wherein said download control information is located in a fourth separate section of the multimedia container.

24. The multimedia container according to claim 17, wherein said media objects are formatted according to any one of MPEG, SVG, JPEG, GIF, PNG, SP-MIDI, XHTML, SMIL, and 3GP.

25. The multimedia container according to claim 17, wherein said identifiable starting file is formatted according to any one of SMIL, HTML, XHTML, and SVG.

26. The multimedia container according to claim 17, wherein said multimedia container is configured for comprising different types of media objects in a transparent way, whereby the addressing, filenames, and MIMO types of the individual media objects are preserved.
